# EUROPEAN PATENT APPLICATION

(11) **EP 4 790 365 A1**
(43) Date of publication of application: **12.08.2026**
(21) Application number: 26152267.6
(22) Date of filing: 16.01.2026
(51) Int. Cl.: G01C 19/5726, G01C 19/5776

(54) **TECHNIQUES FOR REDUCING VARIATIONS IN A DIFFERENCE BETWEEN DRIVE MODE AND SENSE MODE FREQUENCY IN A SPLIT MODE MEMS GYROSCOPE**

(30) Priority: 10.02.2025 US 202519049858
(71) Applicant: Honeywell International Inc., Charlotte, NC 28202 (US)
(72) Inventor: BROWN, Andrew Roberts, Charlotte, 28202 (US); GNERLICH, Markus Hans, Charlotte, 28202 (US); GUND, Ved, Charlotte, 28202 (US); REINKE, John, Charlotte, 28202 (US)
(74) Representative: Haseltine Lake Kempner LLP

(57) **Abstract**

Techniques are provided for reducing variation of a difference between a frequency of a sense mode and a frequency of a drive mode in a split mode microelectromechanical system (MEMS) gyroscope. Circuitry monitors each such frequencies. In response to such frequencies, the circuitry injects a control signal, into one or more quadrature force rebalance combs of a proof mass system of the MEMS gyroscope, to facilitate such variation reduction.

## Description

### BACKGROUND

A microelectromechanical system (MEMS) gyroscope senses a Coriolis force due to rotation around an axis of rotation. A MEMS gyroscope is a compact and low cost gyroscope as its proof mass system can be mass produced on substrate(s) using conventional semiconductor manufacturing techniques.

A typical proof mass system includes one or more proof masses. In the proof mass system, each proof mass is mechanically coupled to the substrate(s) by one or more springs. Each proof mass system further includes one or more drive combs or electrodes, one or more sense combs or electrodes, one or more quadrature force rebalance combs or electrodes, and one or more drive motion pickoff combs or electrodes. Each of comb described herein optionally includes a pair of interdigitated electrodes.

A drive electrical signal is coupled to each proof mass though the one or more drive combs or electrodes to cause oscillating drive motion (or a drive mode) along one axis. An electrical signal representative of the drive mode, *e.g*., oscillation frequency of the proof mass(es), is picked off with the one or more drive pickoff combs

Rotation of the MEMS gyroscope and the Coriolis force cause each proof mass to be subject to a force in an orthogonal direction to the drive mode and at ninety degrees out of phase from the drive motion; a direction of the force is also in a direction of a sense mode. The sense mode is a mechanical mode used to sense motion in a sense direction. An electrical signal representing the sense motion is provided by the one or more sense combs or electrodes. The sense displacement occurs at the motor motion frequency despite the sense mode frequency not necessarily being matched to the motor mode frequency. The amount of sense displacement is highly dependent on the frequency separation of the motor and sense modes.

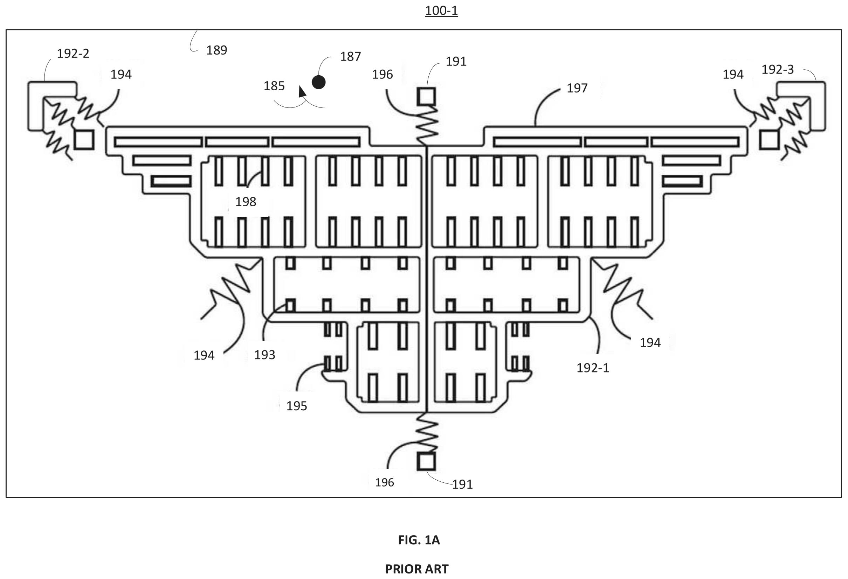

The one or more quadrature force rebalance (QFR) combs or electrodes are used to diminish undesirable quadrature motion of each proof mass. The quadrature motion arises from drive motion being coupled into the sense mode, often due to device mechanical imperfections. Uncompensated quadrature motion can generate undesirable white noise, bias error, and bias instability. U.S. Patent No. 10,371,521 (hereinafter the "'521 Patent"), which is titled "SYSTEMS AND METHODS FOR A FOUR-MASS VIBRATING MEMS STRUCTURE" and patented August 6, 2019, illustrates embodiments of a proof mass system of a MEMS gyroscope utilizing the aforementioned comb(s) or electrode(s) and springs; the '521 Patent is incorporated herein in its entirety. FIG. 1A illustrates a diagram of one embodiment of part of a proof mass system 100-1 that is part of a MEMS gyroscope. FIG. 1A is shown for pedagogical purposes. A proof mass system 100-1, and optionally its constituent components, may be implemented in other ways then illustrated in FIG. 1A.

In FIG. 1A, a proof mass 192-1 is coupled to other proof masses 192-2, 192-3 in the MEMS sensor through proof mass flexures 194 and coupled to a substrate 191 through substrate flexures 196. The proof mass 192 may include drive combs 197, sense combs 198 and quadrature force rebalance combs 193, and drive pickoff combs 195. Optionally, the drive combs 197 are similar to the drive combs discussed in U.S. Pat. No. 7,036,373, which is titled "MEMS GYROSCOPE WITH HORIZONTALLY ORIENTED DRIVE ELECTRODES", patented May 2, 2006, which is incorporated herein in its entirety by reference. The various combs interact with electrodes to acquire measurements about the movement of the proof mass 192 and to drive the movement of the proof mass 192. In at least one implementation, the drive electrodes may be deposited onto the substrate 191 while other electrodes may be silicon combs attached to the substrate 191 but residing above the substrate 191.

A plane 189 is formed by the proof masses 192-1, 192-2, 192-3. An exemplary axis of rotation 187, *e.g*., extends perpendicular to the plane 189. In embodiments of the invention, the MEMS gyroscope senses rotation 185 around an axis of rotation 187.

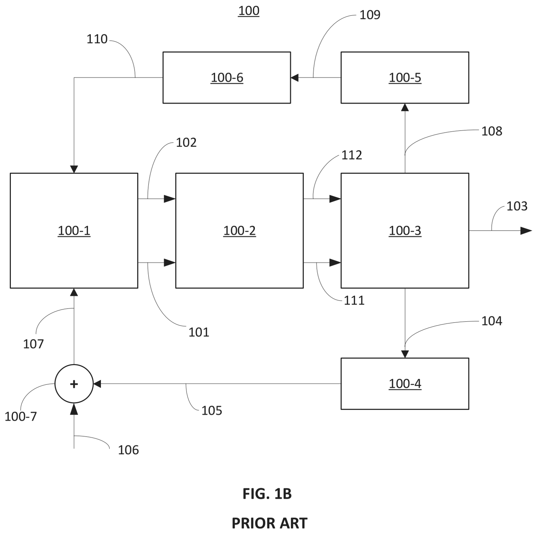

FIG. 1B illustrates a block diagram of one embodiment of a MEMS gyroscope 100 configured to compensate, *e.g*., null, quadrature motion. The MEMS gyroscope 100 includes the proof mass system 100-1, charge amplifiers 100-2, a drive motion frequency demodulator 100-3, a quadrature control loop (or quadrature control loop circuitry) 100-4, a drive amplitude control loop (or drive amplitude control loop circuitry) 100-5, drive circuitry 100-6, and a first summer (or first summer circuitry) 100-7. The proof mass system 100-1 may be implemented as described elsewhere herein.

The proof mass system 100-1, *e.g.,* the one or more drive combs or electrodes thereof, is electrically coupled to the drive circuitry 100-6. The proof mass system 100-1, *e.g.,* the one or more drive combs or electrodes thereof, is configured to receive the aforementioned drive electrical signal 110 generated by the drive circuitry 100-6 in response to an automatic gain control signal 109. Optionally, the automatic gain control signal 109 is used to adjust the amplitude of the drive electrical signal.

The proof mass system 100-1, *e.g.,* the one or more QFR combs or electrodes thereof, is electrically coupled to the first summer 100-7. The proof mass system 100-1, *e.g.,* the one or more QFR combs or electrodes thereof, is configured to receive one or more static QFR bias voltages and one or more QFR control signals 107. The static QFR bias voltage(s) and QFR control signal(s) 107 is generated by summing, in the first summer 100-7, the static QFR bias voltage(s) 106 and the QFR control signal(s) 105. The QFR control signal(s) 105 are generated by the quadrature control loop 100-4. Optionally, the QFR control loop 100-4 is implemented with a proportional, integral, and derivative (PID) controller.

The charge amplifiers 100-2 are electrically coupled to the proof mass system 100-1, *e.g.,* the one or more sense combs or electrodes and one or more drive pickoff combs or electrodes thereof. The charge amplifiers 100-2 are configured to amplify a sense motion electrical signal 101 received from the proof mass system 100-1, *e.g.,* the one or more sense combs or electrodes thereof. The charge amplifiers 100-2 are configured to also amplify a drive pickoff electrical signal 102 received from the proof mass system 100-1, *e.g.,* the one or more drive pickoff combs or electrodes thereof.

The drive motion frequency demodulator 100-3 is electrically coupled to the charge amplifiers 100-2 and configured to receive each of the amplified sense motion electrical signal 111 and the amplified drive motion pickoff electrical signal 112. The drive motion frequency demodulator 100-3 may be implemented with analog and/or digital electrical circuitry. Using the amplified sense motion pickoff electrical signal 111, the drive motion frequency demodulator 100-3 is configured to demodulate the amplified sense motion electrical signal 111 at the drive motion frequency to generate a rate of rotation of the MEMS gyroscope around the axis of rotation, *e.g*., which extends perpendicular to a plane formed by each proof mass of the proof mass system 100-1; thus, *e.g*., such plane is parallel to a plane of through each substrate.

Using the amplified drive motion pickoff electrical signal 112, the drive motion frequency demodulator 100-3 is further configured to generate amplitude information 108 and also frequency and/or phase information about the amplified drive motion pickoff electrical signal 112; optionally, such amplitude information 108 includes a motor signal phase locked to the amplified drive motion pickoff electrical signal 112. The drive motion frequency demodulator 100-3 is electrically coupled to the drive amplitude control loop 100-5 and is also configured to provide the amplitude information (about the amplified drive motion pickoff electrical signal 112) 108 to the drive amplitude control loop 100-5. Using the amplitude, frequency, and/or phase information about the amplified drive motion pickoff electrical signal 112, the drive amplitude control loop 100-5 is configured to generate the automatic gain control signal 109. Optionally, the drive amplitude control loop 100-5 may be implemented with a PID controller.

Using the amplified sense motion electrical signal 111 and the amplified drive motion pickoff electrical signal 112, the drive motion frequency demodulator 100-3 is also configured to generate a rate signal 103 representing a rate of rotation of the MEMS gyroscope around the axis of rotation. The drive motion frequency demodulator 100-3 is further configured to generate the signal representing quadrature motion of the MEMS gyroscope, or quadrature sense motion signal, 104. The quadrature sense motion signal 104 is phase shifted by ninety degrees compared to the rate signal 103.

The quadrature control loop 100-4 is electrically coupled to the drive motion frequency demodulator 100-3 and configured to receive the quadrature sense motion signal 104. Optionally, the quadrature control loop 100-4 may be implemented with a PID controller. Using the quadrature sense motion signal 104, the quadrature control loop 100-4 is configured to generate the quadrature force rebalance signal(s) 105. The first summer 100-7 is electrically coupled to the quadrature control loop 100-4 and is configured to sum the quadrature force rebalance signal(s) 105 with the static QFR bias voltage(s) 106.

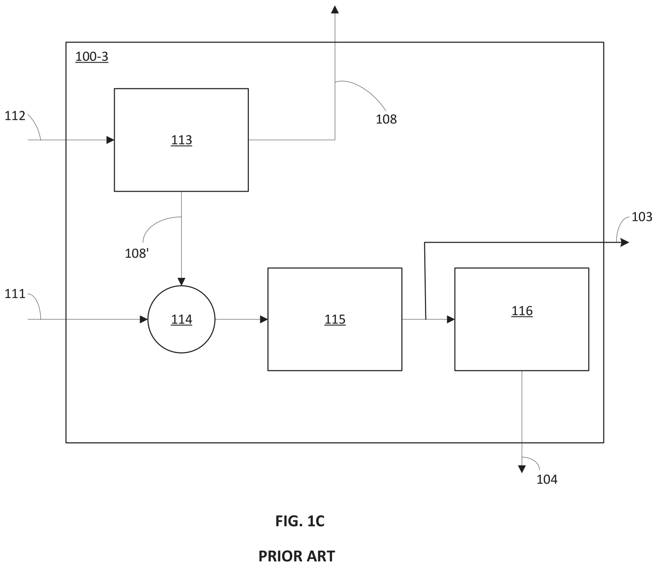

FIG. 1C illustrates a block diagram of one embodiment of the drive motion frequency demodulator 100-3. The drive motion frequency demodulator 100-3 illustrated in FIG. 1C includes a drive phase lock loop (PLL) (or drive PLL circuit) 113, a mixer (or mixer circuit) 114, a low pass filter (or low pass filter circuit) 115, and a ninety degree quadrature phase shifter (or ninety degree or quadrature phase shifter circuit) 116.

The drive PLL 113 is configured to receive the amplified drive motion pickoff electrical signal 112 and to generate amplitude information 108 and a drive mode frequency 108' about and from the amplified drive pickoff electrical signal 112.

The mixer 114 is electrically coupled to the drive PLL 113 and configured to receive the drive mode frequency 108' about and from the amplified drive motion pickoff electrical signal 112, *e.g.,* the motor signal. The mixer 114 is further configured to receive the amplified sense motion electrical signal 111. Using the drive mode frequency 108' about and from the amplified drive motion pickoff electrical signal 112, *e.g.,* the motor signal demodulate, the mixer 114 is configured to demodulate the amplified sense motion electrical signal 111 to generate and output a signal including a representation of a rate of rotation of the MEMS gyroscope around the axis of rotation, *e.g*., which extends perpendicular to a plane formed by each proof mass of the proof mass system 100-1; such plane is parallel to a plane of through each substrate.

The output of the mixer 114 is electrically coupled to the low pass filter 115 which is configured to remove undesired mixing products generated by the mixer 114 in the signal generated by the mixer 114 so that only the rate signal 103 representing the sense motion of MEMS gyroscope remains. When quadrature sense motion is diminished, *e.g*., nulled, via the quadrature control loop 100-4, the rate signal 103 represents the rotation rate of the gyroscope about the axis of rotation. The ninety degree phase shifter 116 is configured to receive at least a portion of the rate signal 103, and to shift its phase by ninety degrees so as to generate the quadrature sense motion signal 104.

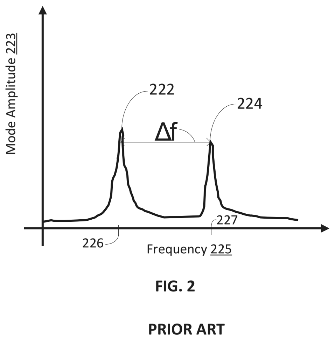

Some MEMS gyroscopes are operated with different drive mode and sense mode frequencies; this is often referred to as "split mode" operation. FIG. 2 illustrates a diagram of one embodiment of split mode operation. In FIG. 2, the x-axis represents frequency 225 and the y-axis represents mode amplitude 223. As illustrated, the sense mode 222 has a different, *e.g*., lower, sense frequency 226 than the drive frequency 227 of the drive mode 224. The frequency difference (or "delta f") Δf is a difference between the sense frequency 116 and the drive frequency.

In split mode operation, delta f Δf may vary with temperature or drift over time. Because delta f Δf determines scale factor and bias of a split mode MEMS gyroscope, such a spilt mode MEMS gyroscope suffers from scale factor error and non-linearity.

### SUMMARY

In some aspects, the techniques described herein relate to a method for diminishing variations in a difference in frequency between a sense frequency of a sense mode and a drive frequency of a drive mode in a microelectromechanical system (MEMS) gyroscope including a proof mass system which includes one or more proof masses, one or more sense combs or electrodes, one or more drive pickoff combs or electrodes, one or more drive combs or electrodes, and one or more quadrature force rebalance (QFR) combs or electrodes, wherein the proof mass system is configured to sense rotation around an axis of rotation, the method including: receiving, from the one or more sense combs or electrodes, a sense motion electrical signal; receiving, from the one or more drive pickoff combs or electrodes, a drive motion pickoff electrical signal; amplifying each of the sense motion electrical signal and the drive motion pickoff electrical signal; using an amplified sense motion electrical signal and an amplified drive motion pickoff electrical signal, generating a rate signal representing a rate of rotation around the axis of rotation; using the amplified drive motion pickoff electrical signal, generating a drive electrical signal configured to excite drive mode motion; receiving, at the one or more drive combs or electrodes, the drive electrical signal; using a quadrature sense motion signal, generating at least one QFR control signal, wherein the quadrature sense motion signal is a signal representing motion of the one or more proof masses in a sense mode and which is ninety degrees out of phase from the rate signal; using the amplified sense motion electrical signal, generating an alternating current (AC) signal with a frequency that is the difference in frequency; using the frequency of the amplified sense motion electrical signal and a frequency of the amplified drive motion pickoff electrical signal, generating a delta f control signal which is configured to diminish the variations in the difference; and receiving, at the one or more QFR combs or electrodes, the at least one QFR control signal, the AC signal, and the delta f control signal.

In some aspects, the techniques described herein relate to a microelectromechanical system (MEMS) gyroscope which diminishes variations in a difference in frequency between a sense frequency of a sense mode and a drive frequency of a drive mode, the MEMS gyroscope including: a proof mass system including one or more proof masses, one or more sense combs or electrodes, one or more drive pickoff combs or electrodes, one or more drive combs or electrodes, and one or more quadrature force rebalance (QFR) combs or electrodes, wherein the proof mass system is configured to sense rotation around an axis of rotation and generate a sense motion electrical signal from the one or more sense combs or electrodes and a drive motion pickoff electrical signal from the one or more drive pickoff combs or electrodes; and circuitry configured to: receive, from the one or more sense combs or electrodes, the sense motion electrical signal; receive, from the one or more drive pickoff combs or electrodes, the drive motion pickoff electrical signal; amplify each of the sense motion electrical signal and the drive motion pickoff electrical signal; using an amplified sense motion electrical signal and an amplified drive motion pickoff electrical signal, generate a rate signal representing a rate of rotation around the axis of rotation; using the amplified drive motion pickoff electrical signal, generate a drive electrical signal configured to excite drive mode motion; receive, at the one or more drive combs or electrodes, the drive electrical signal; using a quadrature sense motion signal, generate at least one QFR control signal, wherein the quadrature sense motion signal is a signal representing motion of the one or more proof masses in a sense mode and which is ninety degrees out of phase from the rate signal; using the amplified sense motion electrical signal, generate an alternating current (AC) signal with a frequency that is the difference in frequency; using the frequency of the amplified sense motion electrical signal and a frequency of the amplified drive motion pickoff electrical signal, generate a delta f control signal which is configured to diminish the variations in the difference; and receive, at the one or more QFR combs or electrodes, the at least one QFR control signal, the AC signal, and the delta f control signal.

In some aspects, the techniques described herein relate to an apparatus, including: amplifiers configured to receive and amplify each of a sense motion electrical signal and a drive motion pickoff electrical signal; and circuitry configured to: receive, from one or more sense combs or electrodes of a proof mass system, the sense motion electrical signal; receive, from one or more drive motion pickoff combs or electrodes of the proof mass system, the drive motion pickoff electrical signal; using an amplified sense motion electrical signal and an amplified drive motion pickoff electrical signal, generate a rate signal representing a rate of rotation around an axis of rotation; using the amplified drive motion pickoff electrical signal, generate a drive electrical signal configured to excite drive mode motion; transmit, to one or more drive combs or electrodes, the drive electrical signal; using a quadrature sense motion signal, generate at least one quadrature force rebalance (QFR) control signal, wherein the quadrature sense motion signal is a signal representing motion of the one or more proof masses in a sense mode and which is ninety degrees out of phase from the rate signal; using the amplified sense motion electrical signal, generate an alternating current (AC) signal with a frequency that is a difference between a sense frequency of a sense mode of the proof mass system and a drive frequency of a drive mode of the proof mass system; using the frequency of the amplified sense motion electrical signal and a frequency of the amplified drive motion pickoff electrical signal, generate a delta f control signal which is configured to diminish variations in the difference; and transmit, to one or more QFR combs or electrodes of the proof mass system, the at least one QFR control signal, the AC signal, and the delta f control signal.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1A illustrates a diagram of one embodiment of part of a proof mass system that is part of a MEMS gyroscope;
FIG. 1B illustrates a block diagram of one embodiment of a MEMS gyroscope configured to compensate, e.g., null, quadrature motion;
FIG. 1C illustrates a block diagram of one embodiment of the drive motion frequency demodulator;
FIG. 2 illustrates a diagram of one embodiment of split mode operation;
FIG. 3A illustrates a block diagram of one embodiment of a MEMS gyroscope configured to diminish variations in delta f;
FIG. 3B illustrates a block diagram of another embodiment of a MEMS gyroscope configured to diminish variations in delta f; and
FIG. 4 illustrates a flow diagram of an exemplary method for operating a MEMS gyroscope to diminish variations in delta f.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized, and that structural, mechanical, and/or electrical changes may be made. Furthermore, each method presented in the drawing figures and the specification is not to be construed as limiting the order in which the individual steps may be performed. The following detailed description is not to be taken in a limiting sense.

Embodiments of the invention are modifications to the MEMS gyroscope 100 illustrated in FIG. 1B. The modifications include an additional control loop, *i.e.,* a delta f control loop, to reduce change in delta f, *e.g.,* over time and/or temperature. In embodiments of the invention, to facilitate the delta f control loop, the MEMS gyroscope 100 generates an alternating current (AC) signal at delta f, which is the difference between a frequency of the drive mode and a frequency of the sense mode. The AC signal has a small amplitude to not perturb normal gyroscope operation. The AC signal is injected with the QFR control signal(s) through the QFR comb(s) or electrode(s) into the proof mass system 100-1. Optionally, the AC signal is phase locked to delta f Δf. The injected AC signal creates a small sense frequency motion in the proof mass(es) of the proof mass system 100-1. Because the sense motion is at the sense frequency, the sense motion does not interfere in the rate signal 103 representing representation of a rate of rotation of the MEMS gyroscope around the axis of rotation which is demodulated at a frequency of the drive mode amplitude information 108. An additional control loop receives signals indicative of a frequency of the AC signal and the drive mode frequency 108', and generates a delta f control signal. The delta f control signal is added to the QFR control signal(s) and the AC signal and injected into the QFR comb(s) or electrode(s) into the proof mass system 100-1. The delta f control signal causes the frequency difference (or "delta f') Δf, between the sense frequency 226 of the sense mode 222 and the drive frequency 227 of the drive mode 224, to vary less, *e.g.* to remain substantially constant.

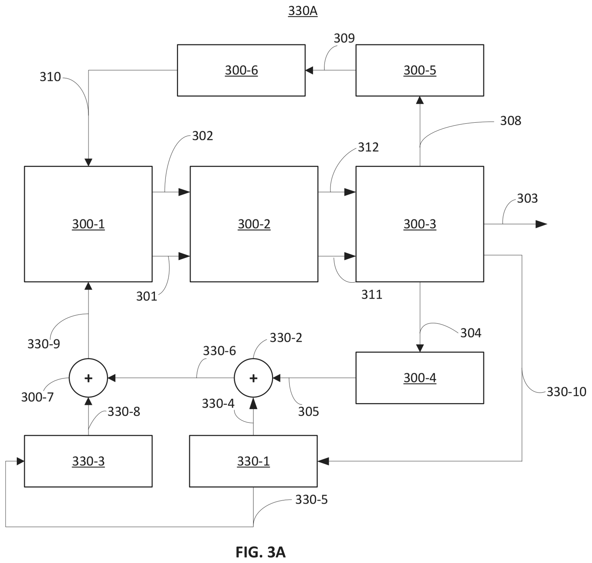

FIG. 3A illustrates a block diagram of one embodiment of a MEMS gyroscope 330A configured to diminish variations in delta f. Unless described otherwise herein, signals and components, and their operation, are common to both MEMS gyroscopes illustrated in FIGS. 1B and 3A, and are described elsewhere herein. Embodiments of the invention do necessarily utilize the one or more static QFR bias voltages described with respect to the MEMS gyroscope 100 illustrated in FIG. 1B; rather only the QFR control signal(s) 305 are used. For pedagogical purposes, only one proof mass is illustrated hereinafter; however, embodiments of the invention are not limited to one proof mass.

The MEMS gyroscope 330A includes a sense demodulator (or sense demodulator circuit) 330-1, a sense signal summer (or sense signal summer circuit) 330-2, and a delta f control loop (or delta f control loop circuit) 330-3. The sense demodulator 330-1 is configured to receive a sense motion electrical signal demodulated at the drive mode frequency 330-10 from the drive motion frequency demodulator 300-3. The drive motion frequency demodulator 300-3 is further configured to generate such sense motion electrical signal demodulated at the drive mode frequency 330-10, *e.g.,* by phase locking. The sense demodulator 330-1 demodulates at the delta f Δf. Optionally, the sense demodulator 330-1 may be implemented with a PLL (or PLL circuitry). The sense demodulator 330-1 is further configured to generate (a) an AC signal 330-4 at the delta f frequency electrical signal which is the difference between the drive and sense mode frequencies. The sense signal summer 330-2 is electrically coupled to the sense demodulator 330-1 and is configured to receive the AC signal 330-4 from the sense demodulator 330-1; the sense signal summer 330-2 is further configured to add the AC signal 330-4 to the QFR control signal(s) 305 generated by the quadrature control loop 300-4. As a result, the sense signal summer 330-2 emits a sum 330-6 of the QFR control signal(s) 305 and the AC signal 330-4.

The delta f control loop 330-3 is electrically coupled to the sense demodulator 330-1 and is configured to receive the frequency 330-5 of the amplified sense motion electrical signal 311 which is at frequency delta f Δf. The delta f control loop 330-3 is also electrically coupled to the drive motion frequency demodulator 300-3 and configured to receive the drive mode frequency 308' of the amplified drive motion pickoff electrical signal 312 which is the same as the frequency of the drive motion pickoff electrical signal 302. Using the frequencies of the amplified sense motion electrical signal 311 and the amplified drive motion pickoff electrical signal 312, the delta f control loop 330-3 is configured to generate the delta f control signal 330-8 which is configured to diminish changes in delta f Δf, *e.g.,* to cause delta Δf to be substantially constant.

The first summer 300-7 is electrically coupled to the delta f control loop 330-3 and is configured to receive the delta f control signal 330-8. The first summer is further configured to sum the delta f control signal 330-8 and the sum 330-6 of the QFR control signal(s) 305 and the AC signal 305. The first summer is also configured to emit the sum 330-9 of the delta f control signal 330-8 and the sum 330-6 of the QFR control signal(s) and the AC signal. The proof mass system 300-1, *e.g.,* QFR comb(s) or electrode(s) therein, are configured to receive the sum 330-9 of the delta f control signal 330-8 and the sum 330-6 of the QFR control signal(s) and the AC signal.

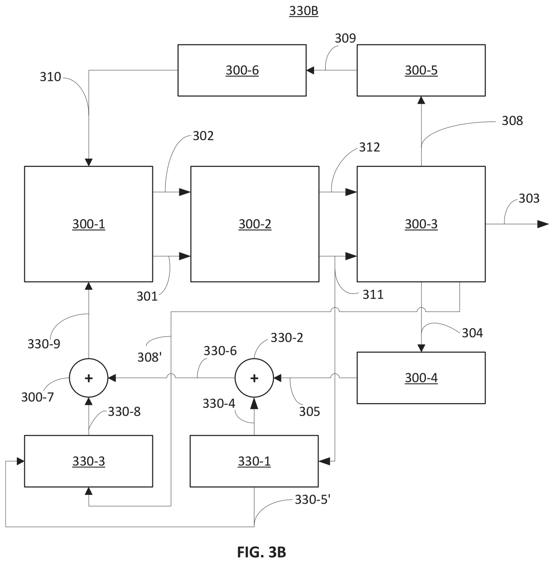

FIG. 3B illustrates a block diagram of another embodiment of a MEMS gyroscope 330B configured to diminish variations in delta f. Unless described otherwise herein, signals and components, and their operation, are common to both MEMS gyroscopes illustrated in FIGS. 1B and 3B, and are described elsewhere herein. Embodiments of the invention do necessarily utilize the one or more static QFR bias voltages described with respect to the MEMS gyroscope 100 illustrated in FIG. 1B; rather only the QFR control signal(s) 305 are used. For pedagogical purposes, only one proof mass is illustrated hereinafter; however, embodiments of the invention are not limited to one proof mass.

FIG. 3B differs from FIG. 3A as follows. The delta f control loop 330-3 does not receive frequency delta f Δf. Rather, frequency delta f Δf is generated in the delta f control loop 330-3 by taking a difference of the frequency 330-5' of the amplified sense motion electrical signal and the drive mode frequency 308'. The delta f control loop 330-3 is electrically coupled to the sense demodulator 330-1, but is configured to receive a frequency 330-5' of the amplified sense motion electrical signal 311 which is the sense mode frequency and the drive mode frequency 308' from the drive motion frequency demodulator 300-3. The sense demodulator 330-1 is electrically coupled to the charge amplifiers 300-2 and configured to receive the amplified sense motion electrical signal 311 from the charge amplifiers 300-2.

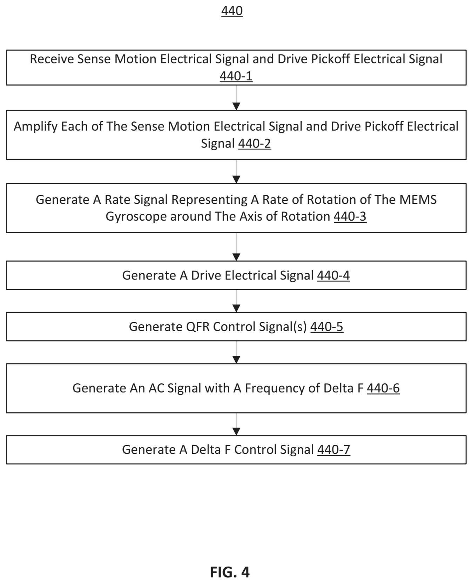

FIG. 4 illustrates a flow diagram of an exemplary method 440 for operating a MEMS gyroscope to diminish variations in delta f. Exemplary method 440 may be implemented by the apparatuses illustrated in FIG. 1A, 1C, and/or 3. To the extent the methods herein are described herein as being implemented with one or more of the apparatuses illustrated in FIGS. 1A, 1C, and/or 3, it is to be understood that other embodiments can be implemented in other ways. Techniques described with respect to the embodiments illustrated by FIGS. 1A, 1C, and/or 3 may be applicable to the method 440.

The blocks of the flow diagrams herein have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner). Optionally, the following blocks are performed during the fourth time period.

In block 440-1, a sense motion electrical signal and a drive motion pickoff electrical signal are received, *e.g.,* from a proof mass system. Optionally, the proof mass system is a component of the MEMS gyroscope configured to diminish variations in delta f. Optionally, the sense motion electrical signal is configured to be received from the proof mass system, *e.g*., the one or more sense combs or electrodes thereof. Optionally, the drive motion pickoff electrical signal is configured to be received from the proof mass system, *e.g*., the one or more drive motion pickoff combs or electrodes thereof.

In block 440-2, each of the sense motion electrical signal and the drive motion pickoff electrical signal is amplified, *e.g*., by charge amplifiers. In block 440-3, using an amplified sense motion electrical signal and an amplified drive motion pickoff electrical signal, a rate signal representing a rate of rotation (*e.g.*, of the MEMS gyroscope, for example, the proof mass system thereof) around an axis of rotation is generated. Optionally, such axis is perpendicular to a plane formed by each proof mass of a proof mass system of the MEMS gyroscope.

In block 440-4, using the amplified drive motion pickoff electrical signal, a drive electrical signal is generated and is configured to excite drive mode motion. Optionally, the drive electrical signal has a same frequency as or one half the frequency of the amplified drive motion pickoff electrical signal. Optionally, the drive electrical signal is received by the proof mass system, *e.g*., the one or more drive combs or electrodes thereof. Optionally, the amplified drive motion pickoff electrical signal is generated as follows: (a) Using the amplified drive motion pickoff electrical signal, a motor signal is generated. Optionally, the motor signal is phase locked to the amplified drive motion pickoff electrical signal. (b) Using the motor signal, an automatic gain control signal is generated. (c) Using the automatic gain control signal, the drive electrical signal is generated. Optionally, the automatic gain control signal is used to adjust an amplitude of the drive electrical signal.

In block 440-5, using a quadrature sense motion signal, one or more QFR control signals are generated. The quadrature sense motion signal is the signal representing sense motion (*e.g.*, of the MEMS gyroscope, for example, the proof mass system thereof) but is phase shifted by ninety degrees with respect to the rate signal. Sense motion is motion of the proof mass(es) in a sense mode direction.

In block 440-6, using the amplified sense motion electrical signal, an AC signal with a frequency of delta f Δf, is generated. In block 440-7, using frequency delta f Δf, a delta f control signal 330-8 is generated. The delta f control signal is configured to reduce variations in delta f, *e.g.,* cause delta f to be substantially constant. Optionally, the QFR control signal(s), the AC signal, and the delta f control signal are received by the proof mass system, *e.g*., the one or more QFR combs or electrodes thereof.

Optionally, the QFR control signal(s), the AC signal, and the delta f control signal are summed together prior to being received by the one or more QFR combs or electrodes. Optionally, the QFR control signal(s) and the AC signal are summed, and then the sum of the QFR control signal(s) and the AC signal is further summed with the delta f control signal prior to being receive by the one or more QFR combs or electrodes.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of' is used to mean one or more of the listed items can be selected.

Terms of relative position as used in this application are defined based on a plane parallel to the conventional plane or working surface of a material (*e.g*., a layer or a substrate), regardless of orientation. Terms such as "on," "higher," "lower," "over," "top," and "under" are defined with respect to the conventional plane or working surface being on the top surface of a layer or substrate, regardless of orientation. The terms "about" or "substantially" indicate that the value or parameter specified may be somewhat altered, as long as the alteration does not result in nonconformance of the process or structure to the illustrated embodiment. Finally, "exemplary" indicates the description is used as an example, rather than implying that it is an ideal. Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

The processor circuitry described herein may include one or more microprocessors, microcontrollers, digital signal processing (DSP) elements, application-specific integrated circuits (ASICs), and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures.

The memory circuitry described herein can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), and/or flash memory. Combinations of the above are also included within the scope of computer readable media.

Methods of the invention can be implemented in computer readable instructions, such as program modules or applications, which may be stored in the computer readable medium that is part of (optionally the memory circuitry) or communicatively coupled to the processing circuitry, and executed by the processing circuitry, optionally the processor circuitry. Generally, program modules or applications include routines, programs, objects, data components, data structures, algorithms, and the like, which perform particular tasks or implement particular abstract data types.

### Example Embodiments

Example 1 includes a method for diminishing variations in a difference in frequency between a sense frequency of a sense mode and a drive frequency of a drive mode in a microelectromechanical system (MEMS) gyroscope including a proof mass system which includes one or more proof masses, one or more sense combs or electrodes, one or more drive pickoff combs or electrodes, one or more drive combs or electrodes, and one or more quadrature force rebalance (QFR) combs or electrodes, wherein the proof mass system is configured to sense rotation around an axis of rotation, the method comprising: receiving, from the one or more sense combs or electrodes, a sense motion electrical signal; receiving, from the one or more drive pickoff combs or electrodes, a drive motion pickoff electrical signal; amplifying each of the sense motion electrical signal and the drive motion pickoff electrical signal; using an amplified sense motion electrical signal and an amplified drive motion pickoff electrical signal, generating a rate signal representing a rate of rotation around the axis of rotation; using the amplified drive motion pickoff electrical signal, generating a drive electrical signal configured to excite drive mode motion; receiving, at the one or more drive combs or electrodes, the drive electrical signal; using a quadrature sense motion signal, generating at least one QFR control signal, wherein the quadrature sense motion signal is a signal representing motion of the one or more proof masses in a sense mode and which is ninety degrees out of phase from the rate signal; using the amplified sense motion electrical signal, generating an alternating current (AC) signal with a frequency that is the difference in frequency; using the frequency of the amplified sense motion electrical signal and a frequency of the amplified drive motion pickoff electrical signal, generating a delta f control signal which is configured to diminish the variations in the difference; and receiving, at the one or more QFR combs or electrodes, the at least one QFR control signal, the AC signal, and the delta f control signal.

Example 2 includes the method of Example 1, wherein generating the drive electrical signal comprises: using the amplified drive motion pickoff electrical signal, generating a motor signal with a same frequency as the amplified drive motion pickoff electrical signal; using the motor signal, generating an automatic gain control signal; and generating the drive electrical signal whose amplitude is determined using the automatic gain control signal.

Example 3 includes the method of Example 2, wherein the motor signal is phase locked to the amplified drive motion pickoff electrical signal.

Example 4 includes the method of any of Examples 1-3, wherein the AC signal is phase locked to the difference in frequency.

Example 5 includes the method of any of Examples 1-4, further comprising, prior to receipt by the one or more QFR combs or electrodes, summing the at least one QFR control signal, the AC signal, and the delta f control signal.

Example 6 includes the method of any of Examples 1-5, further comprising prior to receiving by the one or more QFR combs or electrodes, summing the at least one QFR control signal and the AC signal, and then summing a sum of the at least one QFR control signal and the AC signal and the delta f control signal.

Example 7 includes the method of any of Examples 1-6, wherein the sense frequency of the sense mode is different from the drive frequency of the drive mode.

Example 8 includes a microelectromechanical system (MEMS) gyroscope which diminishes variations in a difference in frequency between a sense frequency of a sense mode and a drive frequency of a drive mode, the MEMS gyroscope comprising: a proof mass system including one or more proof masses, one or more sense combs or electrodes, one or more drive pickoff combs or electrodes, one or more drive combs or electrodes, and one or more quadrature force rebalance (QFR) combs or electrodes, wherein the proof mass system is configured to sense rotation around an axis of rotation and generate a sense motion electrical signal from the one or more sense combs or electrodes and a drive motion pickoff electrical signal from the one or more drive pickoff combs or electrodes; and circuitry configured to: receive, from the one or more sense combs or electrodes, the sense motion electrical signal; receive, from the one or more drive pickoff combs or electrodes, the drive motion pickoff electrical signal; amplify each of the sense motion electrical signal and the drive motion pickoff electrical signal; using an amplified sense motion electrical signal and an amplified drive motion pickoff electrical signal, generate a rate signal representing a rate of rotation around the axis of rotation; using the amplified drive motion pickoff electrical signal, generate a drive electrical signal configured to excite drive mode motion; receive, at the one or more drive combs or electrodes, the drive electrical signal; using a quadrature sense motion signal, generate at least one QFR control signal, wherein the quadrature sense motion signal is a signal representing motion of the one or more proof masses in a sense mode and which is ninety degrees out of phase from the rate signal; using the amplified sense motion electrical signal, generate an alternating current (AC) signal with a frequency that is the difference in frequency; using the frequency of the amplified sense motion electrical signal and a frequency of the amplified drive motion pickoff electrical signal, generate a delta f control signal which is configured to diminish the variations in the difference; and receive, at the one or more QFR combs or electrodes, the at least one QFR control signal, the AC signal, and the delta f control signal.

Example 9 includes the MEMS gyroscope of Example 8, wherein generate the drive electrical signal comprises: using the amplified drive motion pickoff electrical signal, generate a motor signal with a same frequency as the amplified drive motion pickoff electrical signal; using the motor signal, generate an automatic gain control signal; and generate the drive electrical signal whose amplitude is determined using the automatic gain control signal.

Example 10 includes the MEMS gyroscope of Example 9, wherein the motor signal is phase locked to the amplified drive motion pickoff electrical signal.

Example 11 includes the MEMS gyroscope of any of Examples 8-10, wherein the AC signal is phase locked to the difference in frequency.

Example 12 includes the MEMS gyroscope of any of Examples 8-11, wherein the circuitry is further configured to, prior to receipt by the one or more QFR combs or electrodes, sum the at least one QFR control signal, the AC signal, and the delta f control signal.

Example 13 includes the MEMS gyroscope of any of Examples 8-12, wherein the circuitry is further configured to, prior to receiving by the one or more QFR combs or electrodes, sum the at least one QFR control signal and the AC signal, and then sum a sum of the at least one QFR control signal and the AC signal, and the delta f control signal.

Example 14 includes the MEMS gyroscope of any of Examples 8-13, wherein the sense frequency of the sense mode is different from the drive frequency of the drive mode.

Example 15 includes an apparatus, comprising: amplifiers configured to receive and amplify each of a sense motion electrical signal and a drive motion pickoff electrical signal; and circuitry configured to: receive, from one or more sense combs or electrodes of a proof mass system, the sense motion electrical signal; receive, from one or more drive motion pickoff combs or electrodes of the proof mass system, the drive motion pickoff electrical signal; using an amplified sense motion electrical signal and an amplified drive motion pickoff electrical signal, generate a rate signal representing a rate of rotation around an axis of rotation; using the amplified drive motion pickoff electrical signal, generate a drive electrical signal configured to excite drive mode motion; transmit, to one or more drive combs or electrodes, the drive electrical signal; using a quadrature sense motion signal, generate at least one quadrature force rebalance (QFR) control signal, wherein the quadrature sense motion signal is a signal representing motion of the one or more proof masses in a sense mode and which is ninety degrees out of phase from the rate signal; using the amplified sense motion electrical signal, generate an alternating current (AC) signal with a frequency that is a difference between a sense frequency of a sense mode of the proof mass system and a drive frequency of a drive mode of the proof mass system; using the frequency of the amplified sense motion electrical signal and a frequency of the amplified drive motion pickoff electrical signal, generate a delta f control signal which is configured to diminish variations in the difference; and transmit, to one or more QFR combs or electrodes of the proof mass system, the at least one QFR control signal, the AC signal, and the delta f control signal.

Example 16 includes the apparatus of Example 15, wherein generate the drive electrical signal comprises: using the amplified drive motion pickoff electrical signal, generate a motor signal with a same frequency as the amplified drive motion pickoff electrical signal; using the motor signal, generate an automatic gain control signal; and generate the drive electrical signal whose amplitude is determined using the automatic gain control signal.

Example 17 includes the apparatus of Example 16 wherein the motor signal is phase locked to the amplified drive motion pickoff electrical signal.

Example 18 includes the apparatus of any of Examples 15-17, wherein the AC signal is phase locked to the difference.

Example 19 includes the apparatus of any of Examples 15-18, wherein the circuitry is further configured to, prior to receipt by the one or more QFR combs or electrodes, sum the at least one QFR control signal, the AC signal, and the delta f control signal.

Example 20 includes the apparatus of any of Examples 15-19, wherein the circuitry is further configured to, prior to receiving by the one or more QFR combs or electrodes, sum the at least one QFR control signal and the AC signal, and then sum a sum of the at least one QFR control signal and the AC signal, and the delta f control signal.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for diminishing variations in a difference in frequency between a sense frequency of a sense mode and a drive frequency of a drive mode in a microelectromechanical system (MEMS) gyroscope including a proof mass system which includes one or more proof masses, one or more sense combs or electrodes, one or more drive pickoff combs or electrodes, one or more drive combs or electrodes, and one or more quadrature force rebalance (QFR) combs or electrodes, wherein the proof mass system is configured to sense rotation around an axis of rotation, the method comprising:
receiving, from the one or more sense combs or electrodes, a sense motion electrical signal;
receiving, from the one or more drive pickoff combs or electrodes, a drive motion pickoff electrical signal;
amplifying each of the sense motion electrical signal and the drive motion pickoff electrical signal;
using an amplified sense motion electrical signal and an amplified drive motion pickoff electrical signal, generating a rate signal representing a rate of rotation around the axis of rotation;
using the amplified drive motion pickoff electrical signal, generating a drive electrical signal configured to excite drive mode motion;
receiving, at the one or more drive combs or electrodes, the drive electrical signal;
using a quadrature sense motion signal, generating at least one QFR control signal, wherein the quadrature sense motion signal is a signal representing motion of the one or more proof masses in a sense mode and which is ninety degrees out of phase from the rate signal;
using the amplified sense motion electrical signal, generating an alternating current (AC) signal with a frequency that is the difference in frequency;
using the frequency of the amplified sense motion electrical signal and a frequency of the amplified drive motion pickoff electrical signal, generating a delta f control signal which is configured to diminish the variations in the difference; and
receiving, at the one or more QFR combs or electrodes, the at least one QFR control signal, the AC signal, and the delta f control signal;
optionally, wherein the motor signal is phase locked to the amplified drive motion pickoff electrical signal and/or the AC signal is phase locked to the difference in frequency.

2. The method of claim 1, wherein generating the drive electrical signal comprises:
using the amplified drive motion pickoff electrical signal, generating a motor signal with a same frequency as the amplified drive motion pickoff electrical signal;
using the motor signal, generating an automatic gain control signal; and
generating the drive electrical signal whose amplitude is determined using the automatic gain control signal.

3. The method of claim 1, further comprising, prior to receipt by the one or more QFR combs or electrodes, either summing the at least one QFR control signal, the AC signal, and the delta f control signal, or summing the at least one QFR control signal and the AC signal, and then summing a sum of the at least one QFR control signal and the AC signal and the delta f control signal.

4. The method of claim 1, wherein the sense frequency of the sense mode is different from the drive frequency of the drive mode.

5. An apparatus, comprising:
amplifiers configured to receive and amplify each of a sense motion electrical signal and a drive motion pickoff electrical signal; and
circuitry configured to:
receive, from one or more sense combs or electrodes of a proof mass system, the sense motion electrical signal;
receive, from one or more drive motion pickoff combs or electrodes of the proof mass system, the drive motion pickoff electrical signal;
using an amplified sense motion electrical signal and an amplified drive motion pickoff electrical signal, generate a rate signal representing a rate of rotation around an axis of rotation;
using the amplified drive motion pickoff electrical signal, generate a drive electrical signal configured to excite drive mode motion;
transmit, to one or more drive combs or electrodes, the drive electrical signal;
using a quadrature sense motion signal, generate at least one quadrature force rebalance (QFR) control signal, wherein the quadrature sense motion signal is a signal representing motion of the one or more proof masses in a sense mode and which is ninety degrees out of phase from the rate signal;
using the amplified sense motion electrical signal, generate an alternating current (AC) signal with a frequency that is a difference between a sense frequency of a sense mode of the proof mass system and a drive frequency of a drive mode of the proof mass system;
using the frequency of the amplified sense motion electrical signal and a frequency of the amplified drive motion pickoff electrical signal, generate a delta f control signal which is configured to diminish variations in the difference; and
transmit, to one or more QFR combs or electrodes of the proof mass system, the at least one QFR control signal, the AC signal, and the delta f control signal.

6. The apparatus of claim 5, wherein generate the drive electrical signal comprises:
using the amplified drive motion pickoff electrical signal, generate a motor signal with a same frequency as the amplified drive motion pickoff electrical signal;
using the motor signal, generate an automatic gain control signal; and
generate the drive electrical signal whose amplitude is determined using the automatic gain control signal.

7. The apparatus of claim 6 wherein the motor signal is phase locked to the amplified drive motion pickoff electrical signal.

8. The apparatus of claim 5, wherein the AC signal is phase locked to the difference.

9. The apparatus of claim 5, wherein the circuitry is further configured to, prior to receipt by the one or more QFR combs or electrodes, sum the at least one QFR control signal, the AC signal, and the delta f control signal.

10. The apparatus of claim 5, wherein the circuitry is further configured to, prior to receiving by the one or more QFR combs or electrodes, sum the at least one QFR control signal and the AC signal, and then sum a sum of the at least one QFR control signal and the AC signal, and the delta f control signal.
